# NEW EUROPEAN PATENT SPECIFICATION

(11) **EP 0 290 665 B2**
(45) Date of publication and mention of the opposition decision: **25.01.1995**
(45) Mention of the grant of the patent: 29.04.1992
(21) Application number: 87107502.4
(22) Date of filing: 22.05.1987
(51) Int. Cl.: F23C 9/00, F23C 3/00, F23L 15/04, F23C 6/04

(54) **Low nox radiant tube burner and method**
Strahlheizrohrbrenner und -verfahren mit niedriger N0x-Produktion
Brûleur à tube radiant avec faible production de N0x et procédé

(30) Priority: 13.03.1987 US 25365
(43) Date of publication of application: 17.11.1988
(73) Proprietor: BLOOM ENGINEERING COMPANY, INC.,, Pittsburgh Pennsylvania 15236 (US)
(72) Inventor: Finke, Harry P., Pittsburgh PA. 15241 (US)
(74) Representative: Behrens, Dieter, Dr.-Ing.

(56) References cited:
- EP-A- 0 194 079
- DE-A- 2 165 172
- DE-A- 3 131 948
- DE-A- 3 307 539
- DE-B- 1 246 151
- FR-A- 1 090 079
- JP-A- 5 369 932
- JP-A- 5 612 904
- US-A- 3 079 910
- US-A- 4 505 666
- Publication: "La combustion dans les fours et chaudières", G. MONNOT et Al., Editions Technip 1978
- Publication: "Chauffage industriel et utilisation des combustibles", Roger Loison, Edition Technip et Documentation, 1956
- Publication: "Collection des techniques gazières", "Calcul, conception et utilisation des brûleurs industriels à gaz", Editée par l'Association Technique de L'Industrie du Gaz en France, Octobre 1983
- Grand Larousse Encyclopédique, tome quatrième, page 415

## Description

My invention is directed to radiant tube burners and assemblies and more particularly to radiant tube burners and assemblies having low NOX emissions and the method of achieving such emissions.

The need to minimize the formation of oxides of nitrogen during combustion has become a requirement of many applications of fire heaters, boilers, oil field steamers, and the like. That requirement has also now become a reality for heat treating furnaces and other applications which utilize radiant tubes and burners as the heat source for the processing to be carried out.

It is known that there are two basic sources of NOX formation, mainly from the nitrogen in the air and further from the fuel bound nitrogen. The probable use of newly available synfuels which contain large amounts of combined nitrogen as well as the increase in the need to conserve energy further increases the demand for Low NOX emissions.

Various forms of staged combustion and lower flame temperatures have been employed with conventional burners to reduce NOX emissions. The need remains for a radiant tube burner and assembly which will reduce the NOX emissions from radiant tube furnace applications.

DE-B-1 246 151 discloses a radiant tube and burner assembly employing a recuperator to preheat combustion air. The arrangement described is directed to an improved preheating of said combustion air.

In FR-A-1 090 079 a radiant tube and burner assembly is disclosed which is directed to a reduction in flame luminosity when burning heavy hydrocarbons. In order to achieve this aim combustion products are recirculated to the burner so that the flame temperature is lowered. No recuperator is disclosed in this document.

JP-A-56 12904 describes a radiant tube and burner assembly without a jet pump and wherein the restricted throut does not terminate in a diverging section in the area of the flame stabilizer.

My invention provides a radiant tube burner and assembly which reduces NOX emissions to acceptable levels. In addition my invention provides a more uniform heating of the radiant tubes so as to provide minimum variation of temperature along the radiant tube. This also results in improved cycle efficiency and lower fuel costs.

My radiant tube burner assembly comprises a radiant tube having a burner leg and an exhaust leg. A plenum for mixing combustion air and products of combustion from the exhaust leg is positioned to direct the resultant mixture into the burner leg. A jet pump for directing high velocity combustion air through a nozzle and along a central longitudinal axis of the plenum aspirates the products of combustion from the exhaust leg through a duct in registry with the plenum and the exhaust leg. A restricted orifice associated with the duct is dimensioned and sized in relation to the jet pump nozzle to control the amount of products of combustion aspirated to the plenum. A conventional fuel source including a fuel pipe and conventional exhaust means also form a part of my assembly.

The radiant tube and burner assembly includes a recuperator positioned in the exhaust leg for heating the combustion air. The duct for transmitting the products of combustion to the air plenum may be upstream or downstream of the recuperator. Various forms of staged air or staged fuel may be used in conjunction with my assembly.

The method of reducing NOX formation in the radiant tube burner assembly includes directing a stream of high velocity combustion air axially through an air plenum to avoid swirl and aspirating products of combustion from an exhaust leg of the radiant tube so as to mix the products of combustion with the combustion air to form a mixture. Thereafter the mixture is further mixed with the fuel in a burner leg of a radiant tube and downstream of a flame stabilizing device to cause burning.

Figure 1 is a schematic of my radiant tube and burner assembly including a recuperator in the exhaust leg.

Figure 2 is a schematic of the embodiment of Figure 1 except the aspirated products of combustion exit the exhaust leg upstream of the recuperator.

Figure 3 is a schematic of a cold radiant tube and burner assembly.

Figure 4 is a schematic of a recuperator in an exhaust leg for use with the burner of Figure 3.

Figure 5 is a schematic of a staged fuel burner.

Figure 6 is a schematic of a staged air burner.

Figure 7 is a schematic of a multi-staged air burner.

Figure 8 is a graph showing temperature as measured along the radiant tube for a conventional assembly and for my assembly.

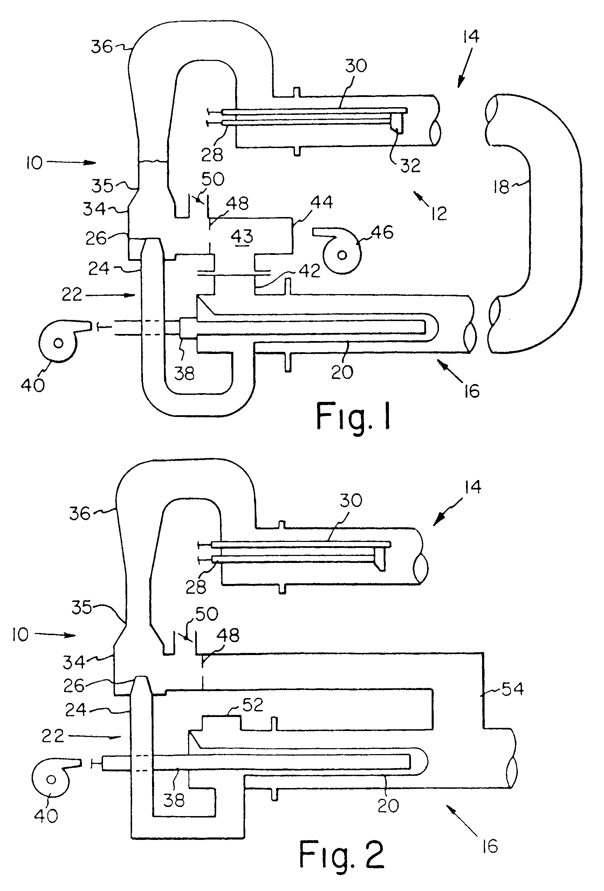

The embodiments of Fig. 1 and 2 do not fall into the scope of the claims.

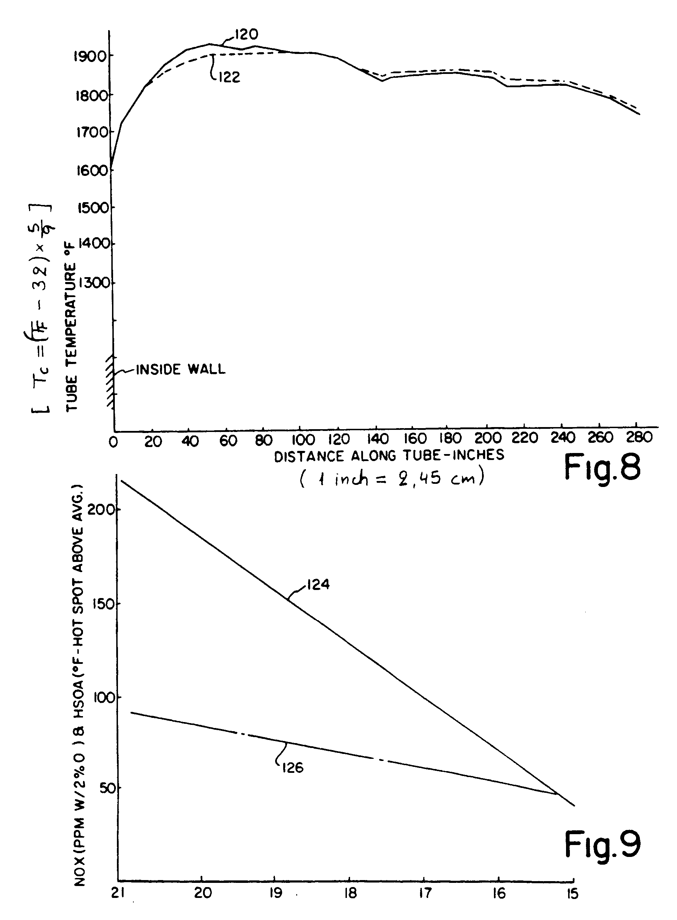

Figure 9 is graph showing NOX emissions and tube temperatures as a function of oxygen percent.

My radiant tube burner and assembly, generally designated 10, can be used in a variety of radiant tube fired furnaces. Representative examples of such furnaces are aluminum furnaces, air heaters, roller hearths, salt baths, lead baths, continuous annealers, wire annealers, enameling furnaces, batch annealers, glass furnaces, and the like.

The radiant tube burner and assembly 10 includes a radiant tube 12 which is illustrated as U-shaped, Figure 1. It will be appreciated that my assembly is suitable for any tube shape and the specific configuration of the radiant tube does not form a part of this invention. The radiant tube 12 of Figure 1 includes a burner leg 14 and an exhaust leg 16 joined by the curved connecting leg section 18. A recuperator 20 is positioned in the exhaust duct formed by the exhaust leg 16 to preheat the combustion air. A jet pump 22 provides the combustion air to the assembly 10.

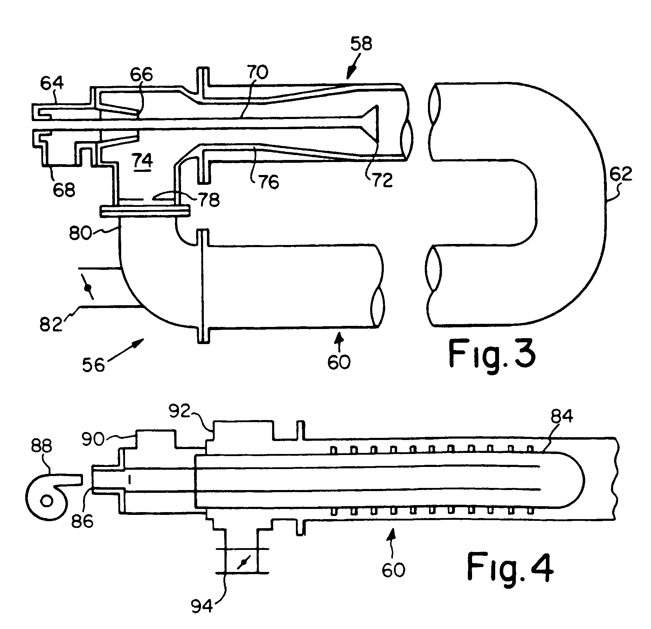

The jet pump body 34 may be separate from the burner body as illustrated in Figure 1 or can be a part of the burner body as illustrated in Figure 4. A jet pump duct 24 is in registry with recuperator 20 through which combustion air is forced by fan 40. The heated combustion air exits axially through nozzle 26 of the jet pump 22. The air is at a pressure on the order of 1 lb./in² (0,07 bar).

An exhaust duct 42 exits the exhaust leg 16 at substantially its terminal end into exhaust chamber 43. Exhaust chamber 43 is generally T-shaped and terminates at one end in an exhaust opening 44 which is aided by exhaust fan 46 and terminates at the other end at a restricted orifice 48. It will be recognized that the system may not always need an exhaust fan to function properly. Upstream from the restricted orifice 48 is a cold air valve which is used for start up. Restricted orifice 48 is in communication with the exhaust chamber 43 and the jet pump body 34.

Jet pump body 34 includes a restricted section 35 which is in communication with plenum 36 which feeds into the burner leg 14 of the radiant tube 12.

A fuel tube 28 extends into the burner leg 14 and provides a fuel source (not shown) such as an oil or gaseous fuel. Ignition is initiated by a conventional ignitor 30, preferably a small capacity premix burning pilot. Fuel tube 28 terminates in a flame stabilizer 32. This stabilizer distributes the air uniformly about the gas stream while creating a partial vacuum between the two streams to promote stability.

In operation, the acceleration of the axially directed combustion air through nozzle 26 produces a negative region around the nozzle which is less than the absolute pressure in the exhaust chamber 43. The orifice 48 controls the quantity of recirculated products through its bore size. This orifice can be a fixed design or a multi-bladed bimetallic device that changes orifice area with product of combustion temperatures. The air duct 38 is connected to a suitable blower 40 to force the air through the system.

The valve 50 is necessary for cold start-up conditions to permit operating within the flamability limits of a gaseous or liquid fuel due to the products of combustion being recirculated. Since the jet pump, in accordance with fan laws will induce more pounds of products of combustion when the temperature is lower, the flamability limit could be exceeded when starting cold.

During normal operation it is desirable that the vitiated stream in plenum 36 be in the range of 16% to 18% oxygen on gaseous fuels and 14% to 18% oxygen on liquid fuels. The vitiated stream then meets with the fuel at flame stabilizer nozzle 32. The flame which is stabilized propagates through the tube completing combustion prior to entry over the recuperator 20. The flue gases are then further pushed or pulled across the recuperator through the duct 42 and out of the exhaust opening 44. When the exhaust at the exhaust opening 44 is communicated to a suction fan 46 the pressure at this outlet duct will be controlled by suitable means in proportion to the air and fuel firing rates to maintain an air flow/products of combustion flow through plenum 36 into the burner leg 14 and back across the recuperator 20 in the exhaust leg 16. Without this suitable control the combustion air issuing from the nozzle 26 would short circuit backwards through orifice 48 and through the exhaust opening 44.

The radiant tube burner and assembly 10 of Figure 2 is virtually identical to that of Figure 1 except that the products of combustion are exited ahead of the recuperator 20 through duct 54. This design minimizes the overall efficiency loss due to the recirculated products of combustion/recuperator capability. Neglecting ambient heat losses from jet pump 22 and air plenum 36 the assembly 10 of Figure 2 operates under the same efficiency as with no recirculated products of combustion but with lower NOX emissions and improved tube temperature profile.

In this embodiment as in the other embodiments it is important that the forced air from jet pump duct 24 exit the jet pump nozzle 26 along the axial center line of the jet pump body 34 and the restricted section 35 which is in registry with plenum 36. Such an arrangement will avoid any swirling effect or Coanda effect and provide optimum operating conditions.

In Figure 3 l have illustrated my invention which also utilizes the operational characteristics of a radiant tube and an eductor coupled in series. The radiant tube and burner assembly 56 includes a burner leg 58, a curved connecting leg 62, and an exhaust leg 60. An exhaust duct 80 connects between the exhaust leg 60 and a plenum 74. A restricted orifice 78 is in registry between the plenum 74 and the duct 80 which also includes an exhaust 82. In this embodiment, the jet pump 64 receives combustion air through inlet 68 and directs that combustion air through nozzle 66 which is concentrically positioned about fuel tube 70 in the area of plenum 74. The aspirated products of combustion from exhaust duct 80 through orifice 78 and the combustion air mix in plenum 74 and are accelerated through restricted section 76 so as to mix with the fuel exiting flame stabilizer nozzle 72 in the burner leg 58. The assembly illustrated in Figure 3 is a cold system with no recuperation of combustion air provided.

As the thermal input is reduced by process demands, the jet flow through nozzle 66 will diminish and the tube will become more effective, and the coupling characteristic between the eductor and tube becomes more efficient, thereby increasing the mass flow recirculated, consequently lowering the flame temperature, and increasing the mass flow disproportionately to the reduction in thermal input demand. This disproportionate increase in mass flow causes a further dilution of the oxidizing agent (air) and a reduction in flame luminosity to the extent that the typical "hot spot" is eliminated because of flame radiation minimized by these recirculating gases. The excess gases are discharged through port 82.

A recuperator is to the cold system of Figure 3. As illustrated in Figure 4, recuperator 84 is positioned in the exhaust leg 60 and communicates with air duct 90 which feeds into the jet pump 64 of Figure 3. The products of combustion either exit through exhaust opening 94 or are aspirated through duct 92 and a restricted nozzle (not shown). In this modification fan 88 directs the air through opening 86 in recuperator 84 to effectuate the operation of the jet pump 64.

With the jet pump 64 coupled to the recuperator 84 typically installed in the exhaust leg 60 of the radiant tube, the pattern is similar to that of Figure 3 in that as the thermal input is reduced, the entering temperature to the recuperator drops, consequently the temperature in plenum 74 drops, and the natural characteristic of the eductor is to increase the mass flow causing an unbalance in the waste gas side versus air side and an increase in air temperature over that anticipated with balanced mass flow. This transient condition will equalize as the increased mass flow is increased (recirculation) and as the air preheat is increased, the velocity issuing from the jet too increases, thereby increasing the recirculated mass flow more than the cold air system previously described. The same effect is realized through the increased proportion of the recirculation gases causing a reduction of flame luminosity, thereby eliminating the hot spots, increasing the air preheat levels, and making the tube temperature profile more uniform.

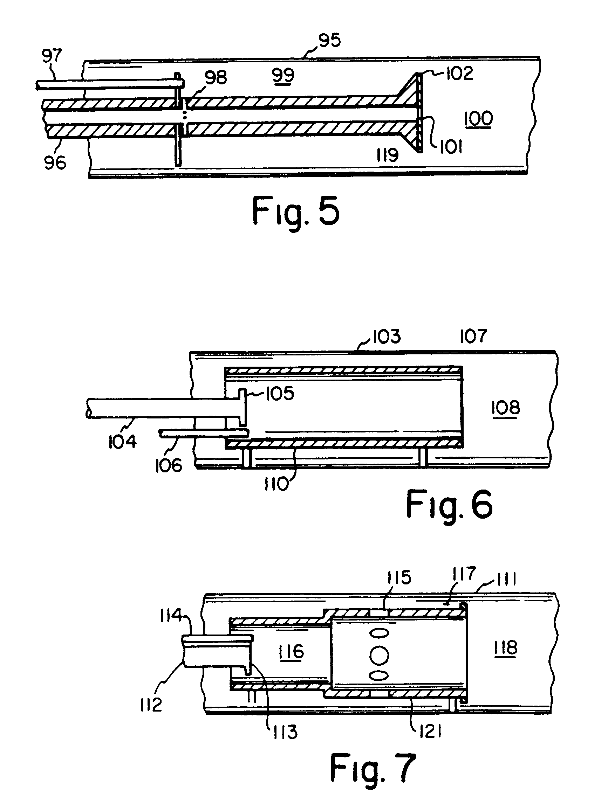

Staged combustion can also be employed to further reduce the NOX emissions as illustrated in Figures 5 through 7. Figure 5 illustrates the configuration of a two staged fuel stage low NOX burner with the fuel being delivered through conduit 96 with approximately 50% issuing from a plurality of orifices 98 and the balance issuing from a single or plurality of orifices 101. A conventional ignitor 97 is provided. The total quantity of vitiated air is passed over the flame retention device 102 in the initial zone 99. The partially burned stream then propagates downstream to the flame retention device 102 with the partially burned flame mixture with excess oxygen passing through space 119 to meet the fuel exiting orifice 101. The flame then propagates and communicates through the tube to its exhaust.

Figure 6 illustrates a two staged air staged combustor with the fuel communicating through duct 104 and exiting at an orifice in retention flange 105. Sleeve 107 defines an internal chamber 108 and forms an annulus 110 within burner leg 103. A standard ignitor 106 initiates combustion in chamber 108 through which about 50% of the combustion air passes. The remaining combustion air passes through annulus 110 where it meets downstream of nozzle 102 with the oxygen deficient products from chamber 108.

A multi-staged air staged combustion is illustrated in Figure 7. Internal sleeve 121 defines a chamber 116 and an annulus 117 as in the embodiment of Figure 6. However, a plurality of orifices 115 are provided intermediate the ends of sleeve 121 to continue the combustion process in a controlled manner thereby further minimizing flame temperature and development of NOX. Final combustion takes place in combustion zone 118.

A series of tests were carried out on an assembly similar to that illustrated in Figure 1. Initially a blank plate was inserted between the jet pump and the flue gas duct so no products of combustion could be recirculated. The assembly was then operated under steady state conditions at a fuel input rate of 89724 W (300,000 BTU/hr). with 2% O₂ and no combustibles. Various test measurements including NOX level leaving the assembly and temperature readings every 20 inches along the radiant tube were measured.

The blank plate was then removed and replaced by a butterfly valve to achieve the desired oxygen content. Again the assembly was operated at 89724 W (300,000 BTU/hr)., the oxygen content varied and the NOX level and hot spot above average (HSOA) measured.

The results are shown in Figures 8 and 9. In Figure 8, the tube temperature curve 120 is shown for the system of Figure 1 without any recirculated products of combustion and curve 122 illustrates the temperature along the radiant tube for recirculated products of combustion. It can be seen that there is a more uniform tube temperature for the radiant tube assembly of my invention.

Figure 9 shows the effect of increasing the products of combustion and decreasing oxygen content on the NOX levels and the hot spot above average for the radiant tube. It can be seen that as the amount of recirculated products of combustion increase, the temperature profile of the tube improves, see curve 126. This curve 126 shows a more uniform heating as the products of combustion increase and the oxygen content decreases. In a similar manner, curve 124 shows a decrease in NOX emissions as the products of combustion increase. It can be seen that NOX levels are reduced from on the order of 200 PPM with no recirculated products of combustion to less than 100 PPM as the oxygen content is reduced to 17% and less through the addition of recirculated products of combustion.

## Claims

1. A radiant tube and burner assembly comprising:
a) a radiant tube (12) having a burner leg (14; 58) and an exhaust leg (16; 60);
b) a plenum (36; 74) for mixing combustion air and products of combustion from the exhaust leg (16; 60) and positioned to direct the resultant mixtures into the burner leg (14; 58);
c) a jet pump (22; 64) for directing high velocity combustion air through a nozzle and along a central longitudinal axis of the plenum and for aspirating the products of combustion;
d) a duct (42; 54) in registry with the plenum and the exhaust leg for directing the products of combustion to the plenum;
e) a restricted orifice (48; 78) associated with the duct (42; 54; 80) and dimensioned in size in relation to the jet pump nozzle (26; 66) to control the amount of products of combustion aspirated to the plenum;
f) exhaust means associated with the exhaust leg (16; 60) or duct for exhausting products of combustion not aspirated by the jet pump (22; 64);
g) a fuel source directed into the burner leg (14; 58) for providing fuel to mix with the combustion air and products of combustion; whereby the fuel, combustion air and products of combustion provide a low temperature, uniform flame for reducing NOx emissions and providing uniform radiation along the radiant tube,
a recuperator (20; 84) is positioned in the exhaust leg (16; 60) for heating the combustion air and that the fuel source includes a fuel tube (28; 70) directed into the burner leg (14; 58) and terminating in a flame stabilizer (32; 72), said mixing the fuel with combustion air and products of combustion taking place around and downstream of the flame stabilizer (32; 72); and
the jet pump (64) directs the combustion air axially through a restricted throat area (76) concentric to the fuel tube (70), said restricted throat terminating in a diverging section in the area of the flame stabilizer (72).

2. The radiant tube and burner assembly of claim 1, wherein the duct (54) is upstream of the recuperator.

3. The radiant tube and burner assembly of claim 1, wherein the duct (42) is downstream of the recuperator.

4. The radiant tube and burner assembly of claim 1, wherein the exhaust means is associated with the duct (42) upstream of the restricted orifice.

5. The radiant tube and burner assembly of claim 2 wherein the exhaust means is downstream of the duct (54) and in the exhaust leg (16).

6. The radiant tube and burner assembly of claim 1 including a valve (50) downstream of the restricted orifice (48) in the duct (42; 54) for providina additional combustion air for cold start up.

7. The radiant tube and burner assembly of claim 1, including a two stage fuel burner formed by a plurality of orifices in a fuel tube which are positioned upstream of the end of the fuel tube so that a portion of the fuel exits through the plurality of orifices and the balance exits a terminal end of the fuel tube.

8. The radiant tube and burner assembly of claim 1 including a multiple stage air burner formed by a sleeve concentrically positioned within the burner leg and surrounding and extending downstream of a fuel tube whereby a portion of the mixed combustion air and products of combustion pass through the sleeve and the balance pass through an annulus formed by the sleeve and the burner tube.

9. The radiant tube and burner assembly of claim 8 wherein said sleeve includes a plurality of orifices intermediate the sleeve ends to provide additional combustion along the sleeve.

10. The radiant tube and burner assembly of claim 1 wherein said plenum (36; 74) includes a reduced section (35; 76) for receiving the combustion air and products of combustion, said section dimensioned in relation to the restricted orifice (48; 78) and jet pump nozzle (26; 66) to further control the mixture of the burner.

11. A method of reducing NOx formation in a radiant tube and burner assembly according to any one of the preceeding claims comprising:
a) directing a stream of high velocity combustion air axially through an air plenum to avoid swirl;
b) aspirating products of combustion from an exhaust leg of the radiant tube by means of said combustion air;
c) mixing the products of combustion with said combustion air to form a mixture; and
d) mixing said mixture with a fuel in the burner leg of the radiant tube
wherein
e) the combustion air is preheated in a recuperator arranged in an exhaust leg of said radiant tube;
f) the mixing of fuel with combustion air and products of combustion is effected in the burner leg of the radiant tube downstream of a flame stabilizer; and
g) the combustion air is directed through a restricted throat area terminating in a diverging section in the area of the flame stabilizer.

## Patentansprüche

1. Strahlrohr- und Brenner-Anordnung, mit:
a) einem Strahlrohr (12) mit einem Brennerzweig (14; 58) und einem Abgaszweig (16; 60),
b) einer Sammelkammer (36; 74) zum Mischen von Verbrennungsluft und Verbrennungsprodukten aus dem Abgaszweig (16; 60), in solcher Anordnung, daß die entstehenden Mischungen in den Brennerzweig (14; 58) schickbar sind,
c) einer Strahlpumpe (22; 64) zum Schicken raschströmender Verbrennungsluft durch eine Düse und entlang einer Mittellängsachse der Sammelkammer, und zum Ansaugen der Verbrennungsprodukte,
d) einer in Deckungsstellung mit der Sammelkammer und dem Abgaszweig angeordneten Leitung (42; 54) zum Leiten der Verbrennungsprodukte zur Sammelkammer,
e) einer der Leitung (42; 54; 80) zugeordneten und in der Größe auf die Strahlpumpendüse (26; 66) abgestimmten Drosselstelle (48; 78) von verkleinertem Querschnitt zum Regulieren der zur Sammelkammer angesaugten Menge Verbrennungsprodukte,
f) einer dem Abgaszweig (16; 60) zugeordneten Abzugseinrichtung oder -leitung zum Abführen von nicht von der Strahlpumpe (22; 64) angesaugten Verbrennungsprodukten, und
g) einer in den Brennerzweig (14; 58) gerichteten Brennstoffquelle zum Zuführen von Brennstoff zum Mischen mit der Verbrennungsluft und Verbrennungsprodukten; wobei der Brennstoff, die Verbrennungsluft und die Verbrennungsprodukte eine gleichmäßige Flamme von niedriger Temperatur zur Verringerung der NOx-Emissionen und für eine gleichmäßige Strahlung entlang dem Strahlrohr erzeugen,
dadurch **gekennzeichnet,** daß im Abgaszweig (16; 60) ein Rekuperator (20; 84) zum Wärmen der Verbrennungsluft angeordnet ist, und daß die Brennstoffquelle ein Brennstoffrohr (28; 70) umfaßt, das in den Brennerzweig (14; 58) gerichtet ist und in einem Flammenstabilisator (32; 72) endet, wobei das Mischen des Brennstoffs mit Verbrennungsluft und Verbrennungsprodukten um und in Strömungsrichtung nach dem Flammenstabilisator (32; 72) stattfindet, und die Strahlpumpe (64) die Verbrennungsluft axial durch den Bereich einer zum Brennstoffrohr (70) konzentrischen Verengung (76) von verkleinertem Querschnitt schickt, wobei die Verengung von verkleinertem Querschnitt im Bereich des Flammenstabilisators (72) in einem sich nach außen vergrößernden Abschnitt endet.

2. Strahlrohr- und Brenner-Anordnung nach Anspruch 1, bei der die Leitung (54) in Strömungsrichtung vor dem Rekuperator angeordnet ist.

3. Strahlrohr- und Brenner-Anordnung nach Anspruch 1, bei der die Leitung (42) in Strömungsrichtung nach dem Rekuperator angeordnet ist.

4. Strahlrohr- und Brenner-Anordnung nach Anspruch 1, bei der die Abzugseinrichtung der Leitung (42) in Strömungsrichtung vor der Drosselstelle von verkleinertem Querschnitt zugeordnet ist.

5. Strahlrohr- und Brenner-Anordnung nach Anspruch 2, bei der die Abzugseinrichtung in Strömungsrichtung nach der Leitung (54) und im Abgaszweig (16) angeordnet ist.

6. Strahlrohr- und Brenner-Anordnung nach Anspruch 1, mit einem in Strömungsrichtung nach der Drosselstelle (48) von verkleinertem Querschnitt in der Leitung (42; 54) angeordneten Ventil (50) zum Zuführen zusätzlicher Verbrennungsluft beim Aufheizen.

7. Strahlrohr- und Brenner-Anordnung nach Anspruch 1, mit einem Zweistufen-Brennstoff-Brenner, gebildet von einer Vielzahl von Öffnungen in einem Brennstoffrohr, die in Strömungsrichtung vor dem Ende des Brennstoffrohres so angeordnet sind, daß ein Teil des Brennstoffs durch die Vielzahl von Öffnungen und der übrige Teil an einem äußersten Ende des Brennstoffrohres austritt.

8. Strahlrohr- und Brenner-Anordnung nach Anspruch 1, mit einem Mehrstufen-Luft-Brenner, gebildet von einer im Brennerzweig konzentrisch angeordneten, ein Brennstoffrohr umgebenden und sich in Strömungsrichtung erstreckenden Hülse, derart, daß ein Teil des Gemischs aus Verbrennungsluft und Verbrennungsprodukten durch die Hülse strömt und der übrige Teil durch einen von der Hülse und dem Brennerrohr gebildeten Ringraum strömt.

9. Strahlrohr- und Brenner-Anordnung nach Anspruch 8, bei dem die Hülse zwischen den Hülsenenden eine Vielzahl von Öffnungen zum Ermöglichen von zusätzlicher Verbrennung entlang der Hülse aufweist.

10. Strahlrohr- und Brenner-Anordnung nach Anspruch 1, bei der die Sammelkammer (36; 74) einen verkleinerten Abschnitt (35; 76) zum Empfangen der Verbrennungsluft und von Verbrennungsprodukten aufweist, wobei dieser Abschnitt in seinen Abmessungen auf die Drosselstelle (48; 78) von verkleinertem Querschnitt und die Strahlpumpendüse (26; 66) so abgestimmt ist, daß das Gemisch des Brenners zusätzlich reguliert wird.

11. Verfahren zum Herabsetzen der NOx-Erzeugung in einer Strahlrohr- und Brenner-Anordnung nach einem der vorhergehenden Ansprüche, umfassend
a) das Schicken eines Stroms rasch strömender Verbrennungsluft axial durch eine Luft-Sammelkammer unter Vermeidung von Wirbelbildung,
b) das Ansaugen von Verbrennungsprodukten aus einem Abgaszweig des Strahlrohres mittels dieser Verbrennungsluft,
c) das Zusammenbringen der Verbrennungsprodukte und dieser Verbrennungsluft zur Herstellung eines Gemischs, und
d) das Mischen dieser Mischung mit einem Brennstoff im Brennerzweig des Strahlrohres,
bei dem
e) die Verbrennungsluft in einem in einem Abgaszweig dieses Strahlrohres angeordneten Rekuperator vorgewärmt wird,
f) das Mischen des Brennstoffs mit Verbrennungsluft und Verbrennungsprodukten im Brennerzweig des Strahlrohres in Strömungsrichtung nach einem Flammenstabilisator durchgeführt wird, und
g) die Verbrennungsluft durch eine Verengung von verkleinertem Querschnitt geschickt wird, die im Bereich des Flammenstabilisators in einem sich nach außen vergrößernden Abschnitt endet.

## Revendications

1. Tube radiant et montage de brûleur constitués de:
a) un tube radiant (12) ayant un bras de brûleur (14; 58) et un bras d'échappement (16, 60);
b) une chambre (36; 74) pour mélanger l'air de combustion et des produits de combustion venant du bras d'échappement (16; 60) et positionné pour diriger les mélanges résultants à l'intérieur du bras de brûleur (14; 58);
c) une pompe à éjecteur (22; 64) pour diriger l'air de combustion à grande vitesse à travers une tuyère et le long d'un axe longitudinal central de la chambre et pour aspirer les produits de combustion;
d) un conduit (42; 54) dans le registre avec la chambre et le bras d'évacuation pour diriger les produits de combustion vers la chambre;
e) un orifice restreint (48; 78) associé avec le conduit (42; 54; 80) et dimensionné en taille en fonction de la tuyère de la pompe à éjecteur (26; 66) pour commander la quantité de produits de combustion aspirée vers la chambre;
f) un moyen d'évacuation associé au bras d'échappement (16; 60) ou le conduit pour évacuer les produits de combustion qui ne sont pas aspirés par la pompe à injection (22; 64) et
g) une source de carburant dirigée à l'intérieur du bras de brûleur (14; 58) en vue d'alimenter le carburant pour le mélanger avec l'air de combustion et les produits de combustion; après quoi le carburant, l'air de combustion et les produits de combustion fournissent une faible température, une flamme uniforme pour réduire les émissions de NOₓ et fournir un rayonnement uniforme le long du tube radiant,
un récupérateur (20; 84) est placé dans le bras d'échappement (16; 60) pour chauffer l'air de combustion ;
source de carburant comprend une canalisation de fuel (28; 70) dirigée à l'intérieur du bras de brûleur (14; 58) et se terminant dans un stabilisateur de flammes (32; 72), ledit mélange du carburant avec l'air de combustion et les produits de combustion ayant lieu aux environs et à l'aval du stabilisateur de flammes (32; 72); et
la pompe à éjecteur (64) dirige l'air de combustion axialement à travers une zone d'étranglement restreinte (76) concentrique à la canalisation de carburant (70), ledit étranglement restreint se terminant en une section divergente dans la zone de stabilisateur de flamme (72).

2. Tube radiant et montage de brûleur selon la revendication 1, dans lesquels le conduit (54) est en amont du récupérateur.

3. Tube radiant et montage de brûleur selon la revendication 1, dans lesquels le conduit (42) est en aval du récupérateur.

4. Tube radiant et montage de brûleur selon la revendication 1, dans lesquels le moyen d'évacuation est associé au conduit (42) en amont de l'orifice de restreint.

5. Tube radiant et montage de brûleur selon la revendication 2, dans lesquels le moyen d'évacuation est en aval du conduit (54) et dans le bras d'échappement (16).

6. Tube radiant et montage de brûleur selon la revendication 1, incluant une vanne (50) en aval de l'orifice restreint (48) dans le conduit (42; 54) pour alimenter en air de combustion supplémentaire pour un démarrage à froid.

7. Tube radiant et montage de brûleur selon la revendication 1, incluant un brûleur à deux étages de carburant formé d'un ensemble d'orifices dans une canalisation de carburant qui sont placés en amont de l'extrémité de la canalisation de carburant de manière qu'une partie du carburant sorte à travers l'ensemble des orifices et que le complément sorte à une extrémité terminale de la canalisation de carburant.

8. Tube radiant et montage de brûleur selon la revendication 1, incluant un brûleur à étages multiples d'air formé par un manchon placé concentriquement à l'intérieur du bras de brûleur et entourant et s'étendant en aval d'une canalisation de carburant, après quoi une portion de l'air de combustion et des produits de combustion mélangés traversent le manchon et le complément traverse un espace annulaire formé par le manchon et le tube de brûleur.

9. Tube radiant et montage de brûleur selon la revendication 8, dans lesquels ledit manchon comprend un ensemble d'orifices entre les extrémités du manchon pour fournir une combustion supplémentaire le long du manchon.

10. Tube radiant et montage de brûleur selon la revendication 1, dans lesquels ladite chambre (36; 74) comprend une section réduite (35; 76) pour recevoir l'air de combustion et les produits de combustion, ladite section dimensionnée en fonction de l'orifice restreint (48; 78) et de la tuyère de la pompe à éjecteur (26; 66) pour contrôler davantage le mélange du brûleur.

11. Procédé de réduction de la formation de NOₓ dans un tube radiant et un montage de brûleur selon l'une quelconque des revendications précédentes consistant à:
a) diriger un courant d'air de combustion à vitesse élevée axialement à travers une chambre d'air pour empêcher la turbulence;
b) aspirer les produits de combustion d'un bras d'échappement du tube radiant au moyen dudit air de combustion;
c) mélanger les produits de combustion avec ledit air de combustion pour former un mélange; et
d) mélanger ledit mélange avec un carburant dans le bras de brûleur du tube radiant
dans lequel
e) l'air de combustion est préchauffée dans un récupérateur disposé dans un bras d'échappement dudit tube radiant;
f) le mélange de carburant avec l'air de combustion et les produits de combustion est effectué dans le bras de brûleur du tube radiant en aval d'un stabilisateur de flamme; et
g) l'air de combustion est dirigé à travers une zone d'étranglement restreint se terminant en une section divergente dans la zone du stabilisateur de flamme.
